# FASCICULE DE BREVET EUROPEEN

(11) **EP 0 924 956 B1**
(45) Date de publication et mention de la délivrance du brevet: **12.04.2006**
(21) Numéro de dépôt: 98403113.8
(22) Date de dépôt: 10.12.1998
(51) Int. Cl.: H04Q 11/04, H04L 9/12

(54) **Dispositif de sécurisation d'une liaison téléphonique entre deux postes d'abonnés**
Vorrichtung zur Sicherung einer Telefonverbindung zwischen zwei Teilnehmerendgeräte
Device for securing a telephone connection between two subscriber terminals

(30) Priorité: 11.12.1997 FR 9715713
(43) Date de publication de la demande: 23.06.1999
(73) Titulaire: FRANCE TELECOM, 75015 Paris (FR)
(72) Inventeur: Fiori, Costantino, 38130 Echirolles (FR)
(74) Mandataire: Loisel, Bertrand

(56) Documents cités:
- EP-A- 0 436 799
- EP-A- 0 511 497
- TANAKA K ET AL: "A CONFIDENTIALITY SYSTEM FOR ISDN INTER-PC HIGH-SPEED FILE TRANSFER" PROCEEDINGS OF THE CONFERENCE ON COMPUTER COMMUNICATIONS (INFOCOM), vol. 3, 12 - 16 juin 1994, pages 1270-1277, XP000496590 TORONTO
- PRESTTUN K: "INTEGRATING CRYPTOGRAPHY IN ISDN" ADVANCES IN CRYPTOLOGY (CRYPTO '87), no. CONF. 7, 16 - 20 août 1987, pages 9-18, XP000130200 SANTA BARBARA
- LU W-P ET AL: "SECURE COMMUNICATION IN INTERNET ENVIRONMENTS: A HIERARCHICAL KEY MANAGEMENT SCHEME FOR END-TO-END ENCRYPTION" IEEE TRANSACTIONS ON COMMUNICATIONS, vol. 37, no. 10, 1 octobre 1989, pages 1014-1023, XP000070200
- "METHOD OF PROVIDING ENCRYPTION/DECRYPTION FOR INTEGRATED SERVICES DIGITAL NETWORK TELECOMMUNICATIONS" IBM TECHNICAL DISCLOSURE BULLETIN, vol. 34, no. 1, juin 1991, pages 331-338, XP000210235

## Description

L'invention concerne la sécurisation d'une liaison téléphonique reliant deux postes d'abonnés, c'est-à-dire notamment la protection de cette liaison téléphonique contre le piratage des informations échangées entre les deux postes d'abonnés.

Une liaison téléphonique comprend matériellement différents équipements tels que des terminaux de réseau, des terminaux de ligne, des lignes d'abonnés, des commutateurs locaux et le réseau téléphonique public commuté. Lorsque cette liaison téléphonique est établie en utilisant un réseau téléphonique non commuté (par exemple le réseau Internet) il est également prévu des dispositifs de routage spécifiques à ce réseau.

Plus précisément, chaque poste d'abonné, par exemple un poste téléphonique ou un modem relié à un ordinateur, est connecté, par l'intermédiaire d'une prise abonné, à un terminal de réseau, essentiellement matériellement constitué d'une carte spécifique, telle que par exemple une carte dite TNR commercialisée par différentes sociétés telles que ALCATEL, SAT, SIEMENS ou PHILIPS. Chaque terminal de réseau est relié par l'intermédiaire d'une ligne d'abonné à un terminal de ligne situé au niveau d'un commutateur local. Le terminal de ligne comporte matériellement également une carte spécifique, en particulier une carte TABN commercialisée par ces mêmes sociétés, et comportant huit entrées/ sorties de façon à gérer huit lignes d'abonnés. Les deux commutateurs locaux associés à la liaison téléphonique reliant les deux postes d'abonnés considérés, sont mutuellement reliés par un réseau téléphonique public commuté.

Par ailleurs, ces deux terminaux de ligne sont également reliés par l'intermédiaire de dispositifs de routage spécifiques connectés sur un réseau téléphonique public non commuté (par exemple Internet). L'homme du métier sait qu'un tel réseau téléphonique public non commuté n'est pas matériellement différent du réseau téléphonique public commuté. Il s'agit en fait d'un réseau virtuel qui utilise les ressources matérielles du réseau téléphonique public commuté lorsque ces dernières sont disponibles. On parle de réseau téléphonique non commuté car il ne met pas en oeuvre des commutateurs locaux pour établir une liaison parfaitement définie et identifiée pour l'échange des informations utiles entre les deux postes d'abonnés.

Le transfert, l'échange de données et de documents effectués au moyen de ces postes d'abonnés, sont devenus au cours de cette dernière décennie des méthodes de communications banalisées entre les individus et/ou les entités géographiquement éloignés. Ce processus mondial de communication électronique s'est encore accéléré au cours de ces dernières années avec le développement au niveau planétaire du réseau Internet. Par ces technologies, sans l'intervention apparente d'un intermédiaire et presque en temps réel, le monde économique échange et transmet des informations pouvant présenter des degrés plus ou moins élevés de confidentialité.

L'utilisation courante de ces nouvelles formes de communications a mis en relief le problème de la sécurisation des échanges entre correspondants, c'est-à-dire entre un émetteur et son destinataire. L'un des objectifs prioritaires de ceux-ci est alors d'éviter que les informations qu'ils font transiter par l'intermédiaire du réseau téléphonique public commuté ou non commuté ne puissent être captées et utilisées à leur insu par des tiers. Une solution à ce problème pourrait consister à installer des moyens de cryptage/décryptage dans le réseau local de chaque abonné, c'est-à-dire en amont de la prise abonné. Dans ce cas, les informations échangées entre les deux postes d'abonnés sont cryptées de bout en bout entre chaque moyen de cryptage/décryptage installé au niveau local de l'abonné. Néanmoins, une telle solution présente de nombreux inconvénients.

Elle nécessite tout d'abord que les matériels de cryptage/décryptage, et les logiciels correspondants implémentés dans ces matériels, soient parfaitement compatibles mutuellement. En pratique, les matériels et les logiciels devront être quasiment identiques. Or, ceci est difficilement réalisable, compte tenu de la très grande disparité pouvant exister entre les différents abonnés. Par ailleurs, une telle solution nécessite un organisme tiers gérant l'attribution des différentes clés de cryptage aux abonnés. En outre, la communication des clés de cryptage entre cet organisme tiers et chacun des abonnés, doit être également sécuritaire, ce qui constitue une difficulté supplémentaire.

Enfin, dans le cas où un abonné sécurisé souhaite contacter un abonné non sécurisé, le premier doit prévoir des moyens internes à son réseau local, capables de déconnecter ses propres moyens de cryptage/décryptage.

Un dispositif similaire est par exemple divulgé dans le document EP 0 511 497 A.

L'invention vise à apporter une solution plus simple à ces problèmes.

Un but de l'invention est de proposer une sécurisation d'une liaison téléphonique entre deux postes d'abonnés, que cette liaison téléphonique soit établie sur le réseau téléphonique commuté ou sur le réseau non commuté, par exemple Internet, et qui soit simple à gérer au niveau des clés de cryptage utilisées, et qui laisse l'ensemble du réseau transparent et ouvert en cas d'un échange d'informations entre un abonné non sécurisé et un abonné sécurisé.

L'invention a également pour but de proposer un système de sécurisation qui s'adapte sans aucune contrainte supplémentaire, autres que celles déjà fixées par l'opérateur de télécommunication sur le réseau déjà existant, tout en assurant une bonne sécurisation des données transmises.

L'invention propose donc un dispositif de sécurisation d'une liaison téléphonique reliant deux postes d'abonnés, cette liaison étant établie par l'intermédiaire d'un réseau téléphonique commuté ou d'un réseau non commuté sur requête de l'abonné appelant.

Selon une caractéristique générale de l'invention, ce dispositif comprend :
deux terminaux de réseau comportant chacun une borne d'entrée/sortie spécifique à laquelle est connectée un poste d'abonné, des moyens de cryptage/décryptage-réseau et une mémoire contenant un identifiant de ladite borne,
deux terminaux de ligne à la fois mutuellement reliés par le réseau téléphonique non commuté et par le réseau téléphonique commuté, et reliés en outre aux deux terminaux de réseau par deux lignes d'abonnés,
des moyens de contrôle connectés sur les réseaux téléphoniques commuté et non commuté, aptes à vérifier les identifiants des deux bornes d'entrée/sortie considérées et à délivrer ou non un signal d'autorisation de cryptage,
des moyens de génération connectés sur les réseaux téléphoniques commuté et non commuté, aptes en présence du signal d'autorisation de cryptage à générer au moins une clé de cryptage, à la faire varier temporellement de façon pseudo-aléatoire, et à la communiquer aux moyens de cryptage/décryptage-réseau ainsi qu'aux moyens de contrôle,
les moyens de cryptage-réseau cryptant, entre les deux terminaux de réseau et à partir de la clé de cryptage, les informations utiles échangées entre les deux postes d'abonnés, les informations échangées entre les deux postes d'appel étant transmises en clair entre chaque terminal de réseau et le poste d'abonné correspondant.

En d'autres termes, l'invention prévoit l'implantation dans le terminal de réseau de chaque abonné sécurisé, de moyens de cryptage/décryptage capables de mettre en oeuvre des protocoles de sécurisation à partir de clés de cryptage générées par des moyens de génération connectés sur le réseau téléphonique commuté et sur le réseau téléphonique non commuté.

Par ailleurs, l'opérateur de télécommunication est le seul propriétaire des solutions et des matériels techniques qu'il utilise pour la sécurisation de ses lignes d'abonné. En pratique, il installera des matériels identiques et des logiciels identiques dans les différents commutateurs locaux et dans les différents terminaux de réseau. Le problème de la compatibilité des logiciels de cryptage/décryptage utilisés aux différents endroits du réseau téléphonique, est donc automatiquement assuré.

Par ailleurs, les moyens de contrôle, par exemple un serveur connecté à la fois sur le réseau téléphonique commuté et sur le réseau téléphonique non commuté, assure une double fonction de vérification des identifiants des deux bornes d'entrée/sortie considérées, donc une vérification de l'appartenance des deux abonnés au service sécurisé et également un stockage des différentes clés de cryptage utilisées en temps réel de façon à ce que l'opérateur puisse, pour des raison de sécurité, connaître en temps réel, le cas échéant, la clé de cryptage utilisée à l'instant courant.

A cet égard, le serveur peut incorporer les moyens de génération de clé de cryptage et les transmettre aux différents moyens de cryptage/décryptage.

En variante, chaque terminal de réseau peut incorporer des moyens de génération des clés de cryptage..Dans ce cas, les clés de cryptage sont générées de façon autonome et à l'initiative du terminal de réseau appelant ce qui rend encore plus difficile l'accès à ces clés pour tout tiers.

Cependant, dans ce cas, les moyens de génération transmettent en temps réel les clés de cryptage ainsi automatiquement générées aux moyens de contrôle (serveur).

Bien que l'invention soit applicable à tous réseaux téléphoniques, en particulier les réseaux téléphoniques analogiques à condition de prévoir des conversions analogique/numérique pour le cryptage des informations, l'invention s'applique de préférence et de façon avantageuse à un réseau téléphonique numérisé tel que le réseau numérique à intégration de services (RNIS) défini dans les recommandations UIT-T de la série I éditées par l'Union Internationale des Télécommunications (antérieurement CCITT).

D'une façon plus générale, dans une liaison téléphonique numérique, il est prévu au moins deux canaux bidirectionnels, ou canaux B, pour l'échange des informations utiles proprement dites entre les deux postes d'abonnés, c'est-à-dire par exemple des informations orales ou des données informatiques issues d'ordinateur ou bien encore des contenus de lettres transmises par télécopie, ainsi qu'un canal de service, ou canal D, fonctionnant en mode message pour le transport de la signalisation et des services en mode paquet.

Dans le cas d'une application de l'invention à un réseau numérisé, on s'affranchit donc de toute conversion analogique/numérique, ce qui simplifie les moyens mis en oeuvre, et les moyens de contrôle vérifient alors avantageusement les identifiants des deux bornes d'entrée/sortie en utilisant le canal de service, et ce que la liaison téléphonique pour l'échange des informations utiles entre les deux postes d'abonné soit établie sur le réseau commuté ou sur le réseau non commuté (Internet). De même, il particulièrement avantageux que les moyens de génération de clés de cryptage transmettent en temps réel les différentes clés de cryptage utilisées au cours d'une liaison téléphonique, en utilisant également le canal de service ou canal D, que la liaison téléphonique pour l'échange des informations utiles entre les deux postes d'abonné soit établie sur le réseau commuté ou sur le réseau non commuté.

Ce mode de réalisation permet, notamment lorsqu'on établit une liaison téléphonique sur le réseau Internet, de rendre quasiment impossible les tentatives de piratage puisque la transmission des clés de cryptage ne s'effectue pas sur le réseau Internet mais sur le canal D du réseau téléphonique commuté par l'intermédiaire des commutateurs locaux.

L'invention prévoit également que les moyens de cryptage/décryptage-réseau de chaque terminal de réseau soient avantageusement situés entre l'interface U et l'interface S du terminal. En effet, sur la ligne d'abonné, lorsqu'un réseau du type RNIS est utilisé, les canaux bidirectionnels B et le canal de service D sont indiscernables. En combinaison avec cette localisation des moyens de cryptage/décryptage entre l'interface U et l'interface S, il est prévu que chaque terminal de réseau comporte des moyens d'aiguillage pour aiguiller les données reçues par l'interface U soit vers les moyens de cryptage/décryptage-réseau si la liaison doit être sécurisée, soit directement vers l'interface S, c'est-à-dire sans passer par les moyens de cryptage/décryptage réseau, si la liaison n'est pas sécurisée.

Lorsque la liaison téléphonique utilise le réseau non commuté (Internet) il est alors prévu que chaque terminal de réseau possède une adresse de localisation sur le réseau non commuté (adresse Internet). Les moyens de cryptage/décryptage réseau du terminal réseau appelant sont alors avantageusement aptes à encapsuler l'adresse de localisation du poste d'abonné appelé ainsi que les informations utiles, dans l'adresse de localisation du terminal de réseau appelé.

D'autres avantages et caractéristiques de l'invention apparaîtront à l'examen de la description détaillée d'un mode de réalisation nullement limitatif, et des dessins annexés sur lesquels :
- la figure 1 est un synoptique schématique d'un mode de réalisation du dispositif selon l'invention, et,
- la figure 2 illustre schématiquement plus en détail l'architecture interne d'un terminal de réseau selon l'invention.

On va maintenant décrire un mode de réalisation de l'invention utilisant un réseau numérisé, et également le réseau Internet.

D'une façon générale, l'homme du métier sait qu'un réseau numérique comporte, sur une paire téléphonique en cuivre, deux canaux bidirectionnels, ou canaux B, à 64 Kbits/s, commutés en mode circuit, et qui sont utilisés pour transporter tous types d'information utiles échangées entre les deux abonnés, par exemple une conversation téléphonique, des données informatiques, etc.

Outre ces deux canaux bidirectionnels B, il est également prévu un canal de service, dit canal D, à 16 Kbits/s, fonctionnant en mode message pour le transport de la signalisation et des services en mode paquet. Une telle structure est notamment celle adoptée pour le réseau numérique à intégration de services RNIS dit "bande étroite". Alors que l'accès au débit de base, décrit ci-avant, et encore appelé 2B+D, est limité à 144 Kbits/s, il est également prévu un accès dit "primaire", ou encore appelé 30B+D, possédant un débit de 2048 Kbits/s, et comportant 30 canaux bidirectionnels B, et un canal D exploité en mode paquet et support de la signalisation. L'accès dit primaire permet de développer une large gamme d'applications télé-informatiques combinant la voix, les données, le texte et l'image.

Bien que la structure générale d'un réseau téléphonique numérique soit parfaitement connue par l'homme du métier, ce dernier pourra néanmoins se référer pour plus de détails aux recommandations UIT-T de la série I, éditée par l'Union Internationale des Télécommunications et se rapportant aux différents aspects techniques et structurels, notamment du réseau numérique avec intégration des services (RNIS).

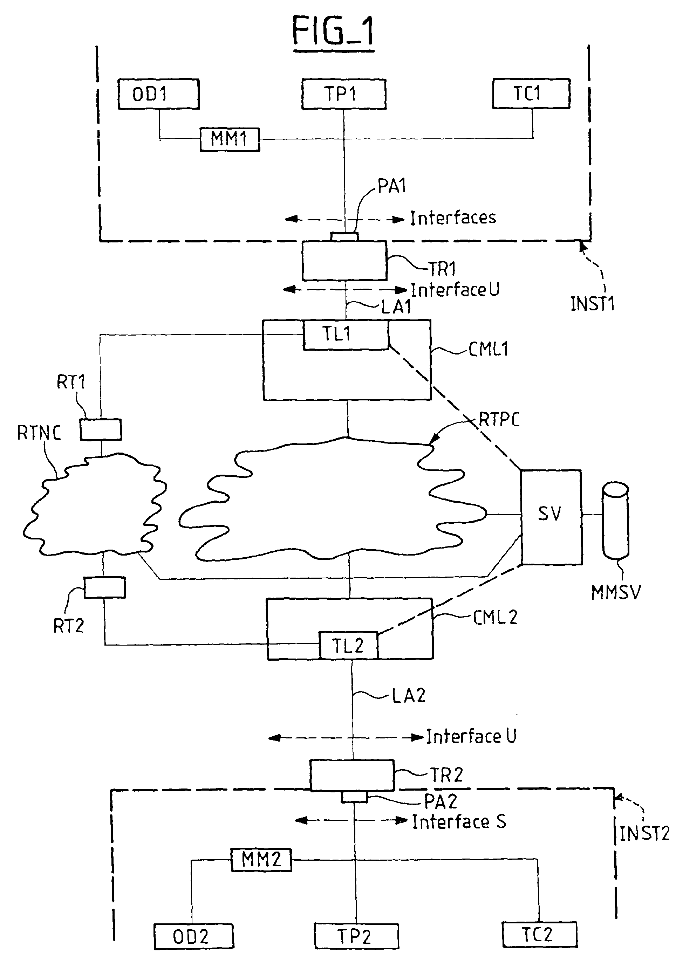

Telle qu'illustrée sur la figure 1, l'installation terminale d'abonné INST1 comporte par exemple un poste téléphonique TP1, un ordinateur OD1 associé à un modem MM1, ainsi qu'un télécopieur TC1. L'ensemble de ces appareils sont reliés à une prise d'abonné PA1 reliée en sortie d'un terminal de réseau TR1.

Le terminal de réseau TR1 est relié par une ligne d'abonné LA1 à un terminal de ligne TL1 incorporé dans un commutateur local CML1.

Le commutateur local CML1 est relié au commutateur local CML2 de l'autre abonné par l'intermédiaire du réseau téléphonique public commuté RTPC.

On retrouve en ce qui concerne le deuxième abonné, comme illustré sur le bas de la figure 1, des éléments analogues à ceux qui viennent d'être décrits pour le premier abonné.

Par ailleurs, les deux terminaux de ligne TL1 et TL2 sont également reliés par l'intermédiaire de deux dispositifs de routage RT1, RT2, de réalisation connue en soi, connectés sur le réseau téléphonique non commuté, ou réseau Internet RTNC.

Enfin, un serveur SV comportant des moyens de traitement, par exemple un ordinateur, est connecté à la fois sur le réseau téléphonique commuté RTPC et sur le réseau Internet RTNC. Ce serveur SV comporte par ailleurs une mémoire de stockage MMSV sur la fonction de laquelle on reviendra plus en détail ci-après.

Bien que la figure 1 représente un serveur centralisé SV, l'invention peut également prévoir l'incorporation de plusieurs serveur locaux, par exemple incorporés au sein des terminaux de ligne TL1 et TL2.

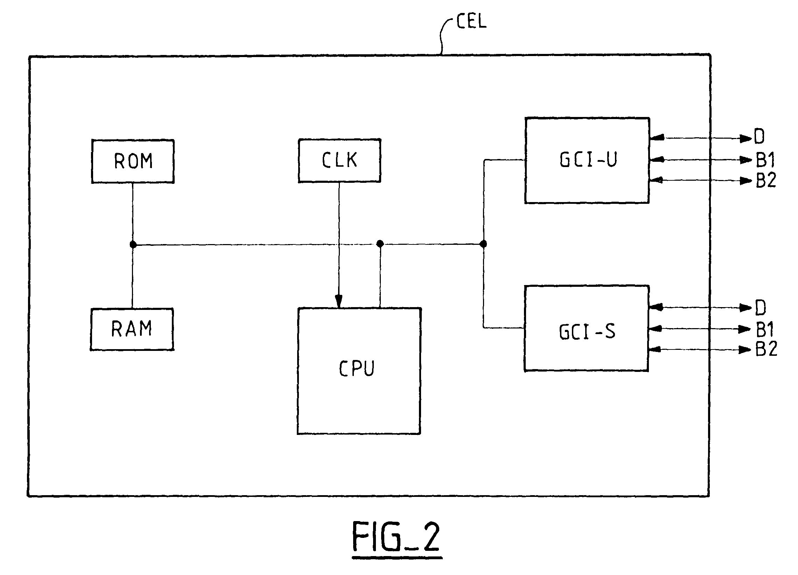

La figure 2 illustre une carte électronique selon l'invention incorporée dans un terminal de réseau associé à un abonné ayant souscrit au service sécurisé.

Cette carte électronique CEL, comporte un circuit d'interface U + S RNIS normalisé, respectivement référencé GCI-U et GCI-S et de réalisation connue en soi (Alcatel Mietec MTC 20277). Le circuit GCI-U est relié à la ligne d'abonné LA1 par le bus U du circuit d'interface et permet notamment la différenciation du canal D et des deux canaux bidirectionnels B1 et B2 du réseau RNIS.

Le circuit GCI-S est relié à la prise abonné PA1 par le bus S du circuit d'interface RNIS.

Ces deux circuits GCI-U et GCI-S sont reliés à un microprocesseur CPU cadencé par un signal d'horloge CLK (tiré de celui véhiculé par le réseau RNIS) et associé à une mémoire vive RAM (32 koctets) et une mémoire morte ROM (32 koctets). A titre d'exemple, le microprocesseur utilisé peut être le microprocesseur ARM7TDMI de la société ARM travaillant à la fréquence de 16MHz. Dans la mémoire morte ROM sont implantés des algorithmes de cryptage/décryptage du type DES (Data Encryption Standard) ainsi que des algorithmes de cryptage/décryptage à clé publique du type RSA et permettant de réaliser de façon logicielle des moyens de cryptage/décryptage réseau.

Par ailleurs, le microprocesseur CPU incorpore des moyens d'aiguillage, également réalisés de façon logicielle, et capables, en réponse à un signal d'autorisation de cryptage, à transmettre aux moyens de cryptage/décryptage les informations reçues de l'interface GCI-U avant de les retransmettre à l'interface GCI-S et inversement. Par contre, en l'absence de signal d'autorisation de cryptage, les moyens de commutation incorporés dans le microprocesseur CPU font transiter, sans cryptage, les informations de l'interface GCI-U à l'interface GCI-S et inversement.

Dans le cas d'une sécurisation de la liaison, le microprocesseur CPU crypte et décrypte en mode DES 3500 blocs par seconde (un bloc DES est constitué de 64 bits). Cette vitesse de traitement est tout à fait compatible avec les vitesses de transmission du réseau numérique décrit ici, qui est de 64 Kbits/s pour un canal B. Ainsi, en mode DES, les moyens de cryptage/décryptage cryptent ou décryptent 1000 blocs à la seconde afin d'être compatibles avec le débit du réseau RNIS.

Par ailleurs, dans le mode de réalisation décrit ici, le serveur SV incorpore des moyens de contrôle, également réalisés de façon logicielle au sein de l'ordinateur du serveur, des moyens de génération pseudo-aléatoires de clés de cryptage DES ainsi que des moyens de cryptage/décryptage du type à clé publique (RSA).

On va maintenant décrire plus en détail, un mode de fonctionnement du dispositif selon l'invention.

On suppose maintenant que l'abonné 1 décide par l'intermédiaire de son poste téléphonique TP1, d'appeler le poste téléphonique de l'abonné 2 en utilisant le réseau téléphonique commuté.

D'une façon générale, chaque prise abonné possède un identifiant qui peut être un code stocké dans la mémoire morte ROM de la carte électronique CEL du terminal de réseau associé à cette prise PA1. Le serveur dispose d'un fichier central contenu dans la mémoire MMSV répertoriant les abonnés qui ont souscrit au service de sécurisation.

Lorsque l'abonné TP1 appelle l'abonné TP2 et souhaite sécuriser sa liaison, l'abonné TP1 compose le numéro d'appel de l'abonné TP2 suivi par exemple d'un signal spécifique comme par exemple la touche dièse. La reconnaissance de cette touche dièse par le terminal de réseau TR1 permet d'établir une liaison avec le serveur SV. Le serveur SV reçoit la demande de sécurisation ainsi que le numéro d'appel de l'abonné TP2 et vérifie dans son fichier si ce dernier fait effectivement partie des abonnés ayant souscrit au service sécurisation. Si tel n'est pas le cas, le serveur envoie au terminal de réseau TR1 un signal de non autorisation de cryptage qui se traduit sur le poste téléphonique de l'abonné TP1 par un message en clair indiquant que la liaison ne peut pas être sécurisée. Dans ce cas, soit l'abonné TP1 décide de ne pas effectuer cette liaison soit il décide de l'effectuer de façon non sécurisée.

On suppose maintenant que l'abonné TP2 fait effectivement partie des abonnés ayant souscrit au service sécurisation.

Avant de fournir un signal d'autorisation de cryptage, les moyens de contrôle du serveur SV vérifie les identifiants respectifs des deux prises abonné des deux terminaux de réseau TR1 et TR2. Pour ce faire, les microprocesseurs incorporés dans ces deux terminaux de réseau transmettent, de façon cryptée à l'aide du logiciel de cryptage RSA, lesdits identifiants. Ceux-ci sont décryptés par les moyens de cryptage/décryptage du serveur puis vérifiés par comparaison avec les identifiants stockés dans la mémoire MMSV du serveur. Si le contrôle est positif, les moyens de génération du serveur transmettent, de façon cryptée à l'aide de l'algorithme RSA, et sur le canal D, une clé de cryptage secrète pour la mise en oeuvre du cryptage des informations échangées entre les deux abonnés à l'aide de l'algorithme DES.

Il a été observé qu'il s'avérait très difficile, voir quasiment impossible de pouvoir intercepter et exploiter les clés de cryptage et toutes les informations circulant sur le canal de service, notamment lorsqu'elles sont elle-même sécurisées par des moyens de cryptage/décryptage tels que les algorithmes à clés publiques du type RSA.

Les clés de cryptage ainsi transmises aux processeurs CPU des terminaux de réseau TR1 et TR2 sont stockées dans les mémoires vives RAM. La réception de ces clés fait par exemple office de signal d'autorisation de cryptage. Les informations utiles échangées entre les postes d'abonnés TP1 et TP2, seront donc transmises en clair au niveau des installations locales INST1 et INST2 mais seront cryptées ensuite entre les terminaux de réseau TR1 et TR2 en utilisant les clés de cryptage et l'algorithme DES.

Afin d'augmenter encore le caractère sécuritaire de la liaison, les moyens de génération du serveur vont faire varier de façon pseudo-aléatoire au cours de la liaison téléphonique, la clé d'origine. Pour cela, un mode de réalisation prévoit de loger dans une partie MR de la mémoire MMSV du serveur, une table de clés de cryptage. Les moyens de génération du serveur incorporent également un générateur pseudo-aléatoire générant, à une cadence d'horloge prédéterminée, des indications numériques représentatives des différentes adresses de la mémoire MR. Lorsque les moyens de génération veulent générer une clé de décryptage, l'unité centrale du calculateur lit alors la valeur courante fournie par le générateur pseudo-aléatoire et extrait de la mémoire MR la clé de cryptage contenue dans l'adresse correspondant à cette valeur courante. Cette nouvelle clé de cryptage est alors cryptée par les moyens de cryptage/décryptage du serveur en utilisant l'algorithme RSA puis transmise sur le canal D aux deux microprocesseurs des terminaux de réseau TR1 et TR2. Ces derniers après avoir décrypté la nouvelle clé de cryptage (chiffrement), poursuivent alors le cryptage (chiffrement) avec cette nouvelle clé et l'algorithme DES.

Dans le cas maintenant où l'abonné TP2 n'est pas un abonné sécurisé et si l'abonné TP1 souhaite cependant établir une liaison téléphonique avec l'abonné TP2, le microprocesseur du terminal TR1 va alors aiguiller directement les données échangées entre l'interface U et l'interface S sans utiliser les moyens de cryptage/décryptage réseau.

On suppose maintenant que l'abonné TP1 souhaite établir une liaison avec l'abonné TP2 via le réseau Internet RTNC. L'abonné TP2 est supposé avoir une adresse Internet AD2.

D'une façon analogue à ce qui a été décrit précédemment, l'abonné TP1 compose l'adresse Internet AD2 de l'abonné TP2 suivie d'une indication spécifique qui a pour conséquence de transmettre au serveur SV via le réseau Internet ladite adresse AD2. Le serveur cherche alors dans la mémoire MMSV l'adresse Internet ADR2 du terminal de réseau TR2 dont dépend l'abonné TP2. Après vérification que le terminal TR2 fait bien partie des terminaux sécurisables, le serveur SV va procéder à l'authentification des identifiants des prises abonnés des terminaux de réseau TR1 et TR2.

A cet égard, bien qu'il soit possible de transmettre sous forme cryptée à l'aide de l'algorithme RSA, ces identifiants via le réseau Internet, il est particulièrement avantageux que les microprocesseur CPU et l'ordinateur du serveur établissent automatiquement en parallèle avec la liaison Internet, une liaison sur le canal D du réseau téléphonique commuté. Ceci est aisément réalisable notamment par la connaissance par le serveur des identifiants (n° ligne abonné + adresse internet de la terminaison abonné) des terminaux de réseau TR1 et TR2. Une fois cette liaison établie, les identifiants sont avantageusement transmis sur le canal D d'une façon analogue à ce qui a été décrit précédemment. De même, après authentification, les clés de cryptage secrètes utilisables pour l'algorithme DES sont alors retransmises aux terminaux TR1 et TR2 sur le canal D.

De même, au cours de l'échange des informations via le réseau Internet, la transmission des nouvelles clés de cryptage générées de façon pseudo-aléatoire s'effectuera également sur le canal D. Ceci renforce de façon très significative le degré de sécurisation d'une liaison Internet en rendant quasiment impossible l'interception de ces clés de cryptage.

Par ailleurs, lorsque les clés secrètes DES, qui ont été décryptées par les moyens de décryptage RSA contenues dans les terminaux de réseau TR1 et TR2, ont été stockées dans les mémoires RAM de ces terminaux, les moyens de cryptage du terminal réseau TR1 cryptent l'adresse Internet AD2 de l'abonné TP2 ainsi que les informations utiles qui lui sont destinées, puis encapsulent ces informations cryptées dans l'adresse Internet ADR2 du terminal réseau TR2. Cette encapsulation est une technique connue en soi par l'homme du métier et notamment conforme aux protocoles IPv4 et IPv6, détaillés notamment dans les publications suivantes :
C. Huitema IPv6 the new Internet protocol, Englewood Cliffs, N° 5 Prentice Hall, 1996 ;
Leiner B.M. et al The DARPA Internet protocole Suite, IEEE Communications Magazine, Vol. 23, 1985.

Le processeur CPU du terminal 2, désencapsule ensuite les informations contenues et les décrypte aux fins de transmission à l'abonné TP2.

Il convient dénoter ici qu'une encapsulation de données dans l'adresse Internet d'un terminal réseau agit comme un signal de la présence d'une liaison sécuritaire nécessitant une décryptage des informations.

L'homme du métier aura donc remarqué ici que l'invention permet donc de transformer les terminaux de réseau TR1 et TR2 en des dispositifs de routage fonctionnellement analogues aux dispositifs de routage classiques du réseau Internet.

## Revendications

1. Dispositif de sécurisation d'une liaison téléphonique entre deux postes d'abonnés, cette liaison étant établie par l'intermédiaire d'un réseau téléphonique commuté ou d'un réseau téléphonique non commuté sur requête de l'abonné appelant, **caractérisé par le fait qu'**il comprend
deux terminaux de réseau (TR1, TR2) comportant chacun une borne d'entrée/sortie spécifique (PA1, PA2) à laquelle est connectée un poste d'abonné, des moyens de cryptage/décryptage-réseau (CPU) et une mémoire (ROM) contenant un identifiant de ladite borne,
deux terminaux de ligne (TL1, TL2) à la fois mutuellement reliés par le réseau téléphonique non commuté et par le réseau téléphonique commuté, et reliés en outre aux deux terminaux de réseau par deux lignes d'abonnés (LA1, LA2),
des moyens de contrôle (SV) connectés sur les réseaux téléphoniques commuté et non commuté, aptes à vérifier les identifiants des deux bornes d'entrée/sortie considérées et à délivrer ou non un signal d'autorisation de cryptage,
des moyens de génération (SV) connectés sur les réseaux téléphoniques commuté et non commuté, aptes en présence du signal d'autorisation de cryptage à générer au moins une clé de cryptage, à la faire varier temporellement de façon pseudo-alëatoire, et à la communiquer aux moyens de cryptage-réseau ainsi qu'aux moyens de contrôle,
les moyens de cryptage-réseau cryptant, entre les deux terminaux de réseau et à partir de la clé de cryptage, les informations utiles échangées entre les deux postes d'abonnés, les informations échangées entre les deux postes d'appel étant transmises en clair entre chaque terminal de réseau et le poste d'abonné correspondant.

2. Dispositif selon la revendication 1, **caractérisé par le fait que** les moyens de contrôle comportent au moins un serveur (SV) et **par le fait que** le serveur incorpore les moyens de génération de clés de cryptage.

3. Dispositif selon la revendication 1, **caractérisé par le fait que** les moyens de cryptage/décryptage réseau de l'un au moins des deux terminaux de réseau (TR1, TR2) comprennent les moyens de génération de clés de cryptage.

4. Dispositif selon l'une des revendications précédentes, **caractérisé par le fait que** les moyens de génération de clés de cryptage comportent des moyens de génération pseudo-aléatoire d'une pluralité de clés de cryptage.

5. Dispositif selon l'une des revendications précédentes, **caractérisé par le fait que** la liaison téléphonique établie sur le réseau téléphonique commuté (RTPC) étant une liaison numérique comportant au moins deux canaux bidirectionnels (B) pour l'échange des informations utiles entre les deux postes d'abonnés, et un canal de service (D), les moyens de génération de clés de cryptage transmettent la ou les clés de cryptage sur le canal de service (D).

6. Dispositif selon l'une des revendications précédentes, **caractérisé par le fait que** le réseau téléphonique commuté est du type numérique (RNIS) avec au moins deux canaux bidirectionnels pour l'échange des informations utiles entre les deux postes d'abonnés, et un canal de service, les moyens de contrôle vérifient les identifiants des deux bornes d'entrée/sortie en utilisant le canal de service (D) que la liaison téléphonique pour l'échange des informations utiles entre les deux postes d'abonnés soit établie sur le réseau commuté ou sur le réseau non commuté.

7. Dispositif selon la revendication 6, **caractérisé par le fait que** les moyens de génération des clés de cryptage transmettent la ou les clés de cryptage sur le canal de service lorsque la liaison téléphonique est établie sur le réseau non commuté (RTNC).

8. Dispositif selon l'une des revendications précédentes, **caractérisé par le fait que** les moyens de cryptage/décryptage réseau de chaque terminal de réseau(TR1, TR2) sont situés entre l'interface U et l'interface S du terminal, et **par le fait que** chaque terminal de réseau (TR1, TR2comporte des moyens d'aiguillage pour aiguiller les données recues par l'interface U soit vers le moyens de cryptage/décryptage réseau soit directement vers l'interface S.

9. Dispositif selon l'une des revendications précédentes, **caractérisé par le fait que** chaque terminal de réseau possède une adresse de localisation sur le réseau téléphonique non commuté, et **par le fait que** les moyens de cryptage/décryptage réseau du terminal réseau appelant sont aptes à encapsuler l'adresse de localisation (AD2) du poste d'abonné appelé (TP2) ainsi que les informations utiles dans l'adresse de localisation (ADR2) du terminal de réseau appelé (TR2).

## Patentansprüche

1. Vorrichtung zur Sicherung einer Telefonverbindung zwischen zwei Teilnehmerendgeräten, wobei diese Verbindung über ein vermitteltes Fernsprechnetz oder ein nicht vermitteltes Fernsprechnetz auf Ersuchen des anrufenden Fernsprechteilnehmers hergestellt wird,
**dadurch gekennzeichnet, dass** sie umfasst:
zwei Netzterminals (TR1, TR2) mit jeweils einem spezifischen Eingangs-/Ausgangsport (PA1, PA2), an den ein Teilnehmerendgerät angeschlossen ist, Mitteln zur Netzverschlüsselung/-entschlüsselung (CPU) und einem Speicher (ROM), der einen Bezeichner des Ports enthält,
zwei Leitungsterminals (TL1, TL2), die sowohl durch das nicht vermittelte Femsprechnetz als auch durch das vermittelte Femsprechnetz miteinander verbunden sind und zudem durch zwei Teilnehmerleitungen (LA1, LA2) mit den beiden Netzterminals verbunden sind,
Kontrollmittel (SV), die mit dem vermittelten Fernsprechnetz und dem nicht vermittelten Fernsprechnetz verbunden und in der Lage sind, die Bezeichner der beiden betreffenden Eingangs-/ Ausgangsports zu überprüfen und ein Signal zur Verschlüsselungsgenehmigung abzugeben oder nicht,
Generierungsmittel (SV), die mit dem vermittelten Fernsprechnetz und dem nicht vermittelten Femsprechnetz verbunden und bei vorhandenem Signal zur Verschlüsselungsgenehmigung in der Lage sind, wenigstens einen Verschlüsselungsschlüssel zu erzeugen, diesen zeitlich pseudozufällig zu verändern und ihn den Netzverschlüsselungsmitteln sowie den Kontrollmitteln mitzuteilen,
wobei die Netzverschlüsselungsmittel zwischen den beiden Netzterminals, ausgehend von dem Verschlüsselungsschlüssel, die verwertbaren Informationen verschlüsseln, die zwischen den beiden Teilnehmerendgeräten ausgetauscht werden, wobei die zwischen den beiden Teilnehmerendgeräten ausgetauschten Informationen zwischen jedem Netzterminal und dem entsprechenden Teilnehmerendgerät offen übertragen werden.

2. Vorrichtung nach Anspruch 1,
**dadurch gekennzeichnet, dass** die Kontrollmittel wenigstens einen Server (SV) umfassen, und dass der Server die Mittel zur Generierung von Verschlüsselungsschlüsseln enthält.

3. Vorrichtung nach Anspruch 1,
**dadurch gekennzeichnet, dass** die Mittel zur Netzverschlüsselung/-entschlüsselung wenigstens eines der beiden Netzterminals (TR1, TR2) die Mittel zur Generierung der Verschlüsselungsschlüssel enthalten.

4. Vorrichtung nach einem der vorhergehenden Ansprüche,
**dadurch gekennzeichnet, dass** die Mittel zur Generierung der Verschlüsselungsschlüssel Mittel zum pseudozufälligen Erzeugen einer Vielzahl von Verschlüsselungsschlüsseln umfassen.

5. Vorrichtung nach einem der vorhergehenden Ansprüche,
**dadurch gekennzeichnet, dass** die in dem vermittelten Femsprechnetz (RTPC) hergestellte Telefonverbindung eine digitale Verbindung ist, die wenigstens zwei bidirektionale Kanäle (B) zum Austausch von verwertbaren Informationen zwischen den beiden Teilnehmerendgeräten und einen D-Kanal (D) aufweist, wobei die Mittel zur Generierung der Verschlüsselungsschlüssel den oder die Verschlüsselungsschlüssel auf dem D-Kanal (D) übertragen.

6. Vorrichtung nach einem der vorhergehenden Ansprüche,
**dadurch gekennzeichnet, dass** das vermittelte Femsprechnetz digitaler Art (RNIS) ist, mit wenigstens zwei bidirektionalen Kanälen zum Austausch von verwertbaren Informationen zwischen den beiden Teilnehmerendgeräten und einem D-Kanal, wobei die Kontrollmittel die Bezeichner der beiden Eingangs-/Ausgangsports durch Nutzung des D-Kanals (D) überprüfen, ungeachtet der Tatsache, ob die Telefonverbindung zum Austausch von verwertbaren Informationen zwischen den beiden Teilnehmerendgeräten in einem vermittelten Femsprechnetz oder einem nicht vermittelten Femsprechnetz hergestellt ist.

7. Vorrichtung nach Anspruch 6,
**dadurch gekennzeichnet, dass** die Mittel zur Generierung der Verschlüsselungsschlüssel den oder die Verschlüsselungsschlüssel auf dem D-Kanal übertragen, wenn die Telefonverbindung in dem nicht vermittelten Fernsprechnetz (RTNC) hergestellt ist.

8. Vorrichtung nach einem der vorhergehenden Ansprüche,
**dadurch gekennzeichnet, dass** die Netzverschlüsselungs-/-entschlüsselungsmittel eines jeden Netzterminals (TR1, TR2) zwischen der Schnittstelle U und der Schnittstelle S des Terminals angeordnet sind, und dass jeder Netzterminal (TR1, TR2) Verzweigungsmittel aufweist, um die durch die Schnittstelle U empfangenen Daten entweder zu dem Netzverschlüssefungs-/-entschlüsselungsmittel oder direkt zu der Schnittstelle S zu leiten.

9. Vorrichtung nach einem der vorhergehenden Ansprüche,
**dadurch gekennzeichnet, dass** jeder Netzterminal eine Adresse zur Lokalisierung in dem nicht vermittelten Fernsprechnetz besitzt, und dass die Netzverschlüsselungs-/-entschlüsselungsmittel des anrufenden Netzterminals in der Lage sind, die Lokalisierungsadresse (AD2) des angerufenen Teilnehmerendgeräts (TP2) sowie die in der Lokalisierungsadresse (ADR2) des angerufenen Netzterminals (TR2) verwertbaren Informationen zu verkapseln.

## Claims

1. Device for securing a telephone connection between two subscriber units wherein this connection is established through a switched telephone network or a nonswitched telephone network at the request of the calling subscriber, **characterised in that** it comprises
two network terminals (TR1, TR2), each comprising a specific input / output terminal (PA1, PA2), to which a subscriber unit, network encryption and decryption means (CPU) and a memory (ROM) containing an identifier of said terminal are connected,
two line terminals (TL1, TL2) simultaneously mutually connected by the nonswitched telephone network and by the switched telephone network and also connected to the two network terminals by two subscriber lines (LA1, LA2),
control means (SV) connected to the switched and nonswitched telephone networks which are able to verify the identifiers of the two input / output terminals in question and to supply, or not supply, an encryption authorisation signal,
generating means (SV) connected to the switched and nonswitched telephone networks which, in the presence of the encryption authorisation signal, are able to generate at least one encryption key, to cause it to temporarily change in a pseudorandom manner and to communicate it to the network encryption means as well as to the control means,
the means of network encryption, encrypting between the two network terminals and on the basis of the encryption key the useful information exchanged between the two subscriber units wherein the information exchanged between the two calling units is transmitted uncoded between each network terminal and the corresponding subscriber unit.

2. Device according to claim 1, **characterised in that** the control means comprise at least one server (SV) and **in that** the server incorporates the generating means for encryption keys.

3. Device according to claim 1, **characterised in that** the network encryption / decryption means of at least one of the two network terminals (TR1, TR2) comprise the generating means for encryption keys.

4. Device according to one of the preceding claims, **characterised in that** the generating means for encryption keys comprise pseudorandom generating means for a plurality of encryption keys.

5. Device according to one of the preceding claims, **characterised in that**, since the telephone connection established on the switched telephone network is a digital connection comprising at least two bidirectional channels (B) for the exchange of useful information between the two subscriber units and a service channel (D), the generating means for encryption keys transmit the encryption key(s) on the service channel (D).

6. Device according to one of the preceding claims, **characterised in that** the switched telephone network is of the digital type (ISDN) with at least two bidirectional channels for the exchange of useful information between the two subscriber units and a service channel wherein the control means verify the identifiers of the two input / output terminals using the service channel (D), regardless of whether the telephone connection for the exchange of useful information between the two subscriber units is established on the switched network or the nonswitched network.

7. Device according to claim 6, **characterised in that** the generating means for encryption keys transmit the encryption key(s) on the service channel if the telephone connection is established on the nonswitched network.

8. Device according to one of the preceding claims,
**characterised in that** the network encryption / decryption means of each network terminal (TR1, TR2) are situated between the interface U and the interface S of the terminal, and **in that** each network terminal (TR1, TR2) comprises directing means for directing the data received by the interface U either to the network encryption / decryption means or directly to the interface S.

9. Device according to one of the preceding claims,
**characterised in that** each network terminal has a location address on the nonswitched telephone network and **in that** the network encryption / decryption means of the calling network terminal are able to encapsulate the location address (AD2) of the subscriber unit called (TP2) and the useful information in the location address (ADR2) of the network terminal called (TR2).
